# EUROPEAN PATENT SPECIFICATION

(11) **EP 0 820 963 B1**
(45) Date of publication and mention of the grant of the patent: **15.09.1999**
(21) Application number: 97112882.2
(22) Date of filing: 25.07.1997
(51) Int. Cl.: C03B 37/014, C03B 37/023, C03B 37/027

(54) **Method for recovering helium from an optical fibre manufacturing process**
Verfahren zur Rückgewinnung von Helium in einem Verfahren zum Herstellen optischer Fasern
Procédé de récupération d'hélium dans un procédé de fabrication des fibres optiques

(30) Priority: 26.07.1996 US 686861
(43) Date of publication of application: 28.01.1998
(73) Proprietor: PRAXAIR TECHNOLOGY, INC., Danbury, CT 06810-5113 (US)
(72) Inventor: Heim, Carl Joseph, Amherst, New York 14228 (US); Schulte, Thomas Robert, Grand Island, New York 14072 (US)
(74) Representative: Schwan, Gerhard, Dipl.-Ing.

(56) References cited:
- EP-A- 0 601 601
- PATENT ABSTRACTS OF JAPAN vol. 11, no. 381 (C-464), 12 December 1987 & JP 62 153132 A (FURUKAWA ELECTRIC CO., LTD.), 8 July 1987,
- PATENT ABSTRACTS OF JAPAN vol. 9, no. 247 (C-307), 3 October 1985 & JP 60 103006 A (TOYO SANSO CO., LTD.), 7 June 1985,
- PATENT ABSTRACTS OF JAPAN vol. 11, no. 124 (C-416), 17 April 1987 & JP 61 261223 A (FURUKAWA ELECTRIC CO., LTD.), 19 November 1986,
- PATENT ABSTRACTS OF JAPAN vol. 9, no. 278 (C-312), 6 November 1985 & JP 60 122741 A (HITACHI CABLE CO., LTD.), 1 July 1985,
- PATENT ABSTRACTS OF JAPAN vol. 5, no. 184 (C-80), 21 November 1981 & JP 56 109831 A (NT&T CORP.), 31 August 1981,
- PATENT ABSTRACTS OF JAPAN vol. 17, no. 11 (C-1015), 8 January 1993 & JP 04 240129 A (SUMITOMO ELECTRIC IND., LTD. ), 27 August 1992,
- PATENT ABSTRACTS OF JAPAN vol. 9, no. 175 (C-292), 19 July 1985 & JP 60 046954 A (NT&T CORP.), 14 March 1985,

## Description

### FIELD OF THE INVENTION

This invention relates to helium recovery processes and more particularly to helium recovery processes associated with optical fiber manufacturing.

### BACKGROUND OF THE INVENTION

Generally, processes for producing optical fibers use helium gas to enhance fiber quality and manufacturing productivity. Optical fiber manufacturing is basically a two-phase process that involves fabrication of a specially constructed glass rod called a preform, and then melting the preform and drawing it into a thin fiber. Preform fabrication normally involves two steps, deposition and consolidation, that may be combined as one continuous operation or split into two separate ones.

Commercial producers use various processes to fabricate preforms, such as Outside Vapor Deposition (OVD), Modified Chemical Vapor Deposition (MCVD), Vapor Axial Deposition (VAD), and Plasma Chemical Vapor Deposition (PCVD). All are based on a thermal chemical vapor reaction that forms mixed oxides which are deposited as layers of glass soot onto a rotating high purity glass tube or rod which may or may not be retained as part of the preform. The resulting opaque soot boule is then consolidated in a sintering process that removes impurities from the deposition process and collapses the boule to produce a clear preform ready for drawing and coating.

Helium presently has three primary uses in optical fiber manufacture, a carrier gas in preform deposition, a sweep gas in preform consolidation, and a heat transfer medium for fiber drawing. Helium is not required for the deposition step but it may be used as a carrier gas, which means that the Helium provides a medium or atmosphere in which the reactive vapors are dispersed and delivered to the deposition site. It is required in the consolidation step to sweep out impurities and, because of its inertness and molecular size, there is practically no alternative when the objective is to produce pure, defect-free preforms. Both preform fabrication steps require high-purity helium. However, a lower purity can be used to enhance fiber cooling in the fiber drawing step which is carried out in the draw stations. Each of the three process steps introduces different impurities, contaminant levels, or heat levels into the helium.

Optical fiber manufacturers generally use "once-through" helium flows in all process steps, once used, the helium becomes a constituent of the waste stream. The traditional once-through helium flows used in optical fiber manufacturing processes are wasteful and result in excessive consumption and unnecessarily high cost.

Helium is a limited, non-renewable resource with unique properties that enable certain processes to be performed. Many of those same properties make it expensive to produce, transport, and store. Helium costs are an order of magnitude higher than nitrogen and several times higher than hydrogen or argon. These gases can be used as inferior substitutes for helium in some applications. Those industries that use helium in their production processes are among our fastest growing, and their ever-increasing demand will put upward pressure on helium prices.

In the past, recovery and recycle of helium used in the optical fiber fabrication processes was not considered feasible because of the purity requirements. However, U.S. Patent Numbers 5,452,583 and 5,377,491 describe a helium recovery process and system for recycling helium. But, both references are limited to helium recovery only from the fiber drawing step of the optical fiber manufacturing process. The recycled helium is fed back into the optical fiber drawing step which can tolerate a lower purity helium than other process steps such as deposition or consolidation.

The fiber drawing step in the optical fiber manufacturing process, based on current practice, can use helium with lower purity ranging from about 90% to about 99%. The impurities normally contained in the helium recovered from the fiber drawing step are particulates, O₂, N₂, Ar, and H₂O. These impurities are relatively easy to remove as compared to impurities contained in helium recovered from other steps in the process.

From EP-A-0 601 601 there is known a method for recovering helium from an optical fiber manufacturing process, comprising:
(a) providing helium to an optical fiber manufacturing process which includes the step fiber drawing, said step utilizing apparatus having an inlet and an outlet;
(b) providing process material the fiber drawing step where it is brought into contact with said helium;
(c) recovering at least a portion of said helium, as recovered helium, from the outlet of the fiber drawing step and providing said recovered helium to an intermediate gas purification system;
(d) providing at least a portion of said recovered helium from the intermediate gas purification system to a final purification step; and
(e) introducing at least a portion of the recovered helium gas from the final purification step to the inlet of the fiber drawing step.

From Patent Abstracts of Japan, vol. 11, no. 381 (C-464) of JP-A-62 153 132 there is known a similar method relating to the recovery of helium from the consolidation step of an optical fiber manufacturing process, wherein the recovered helium is purified and fed to the consolidation step.

### OBJECTS OF THE INVENTION

It is therefore an object of this invention to provide a helium recovery method which will reduce unit cost for producing optical fibers by economically recovering a substantial portion of the helium which, otherwise, would be vented.

It is a further object of the invention to provide recovery and recycle methods that will dramatically reduce the per-unit consumption of helium in the manufacture of optical fibers.

It is yet a further object of the invention to provide a method which can enable helium recovery from most use points in the optical fiber manufacturing process and recycling of the recovered helium to most use points.

Another object is to provide a cost incentive for optical fiber manufacturers to use higher helium flow rates to take advantage of the unique heat transfer properties of helium to improve optical fiber processing rates, which in turn reduces manufacturing cost.

### SUMMARY OF THE INVENTION

This invention comprises a method for recovering helium from two or more steps in an optical fiber manufacturing process. The recovered helium can also be recycled to most of the manufacturing process steps. This can be done be recovering the helium from at least one other step in addition to that from the fiber drawing step forming a combined stream of recovered helium, purifying the recovered helium to an intermediate level and then further purifying and providing the recovered helium to the helium supply line for use in most of the process steps. In one embodiment, helium is recovered from most of the process steps as a combined stream, purified to an intermediate level and only recycled to the fiber drawing step.

In a preferred embodiment helium is recovered from most of the process steps, purified to an intermediate level and a portion is supplied to satisfy the needs of the fiber drawing step, while the remainder is further purified and supplied to the other steps of the manufacturing process.

### BRIEF DESCRIPTION OF THE DRAWINGS

Other objects, features and advantages will occur to those skilled in the art from the following description of preferred embodiments and the accompanying drawings, in which:
Fig. 1 is a schematic diagram of an embodiment of the invention wherein helium is recovered from all steps in the optical fiber manufacturing process, purified and made available for recycle to all steps in the process;
Fig. 2 is a schematic diagram of an embodiment of the invention wherein helium is recovered from all steps in the optical manufacturing process, purified but made available only to the fiber drawing step of the manufacturing process; and
Fig. 3 is a schematic diagram of a preferred embodiment which represents a combination of the embodiments of the invention in Figs. 1 and 2 wherein helium is recovered from all steps in the optical manufacturing process and purified to the level necessary to supply the fiber drawing step and then the remainder of recycled helium is further purified to supply the consolidation and/or the deposition steps.

### DETAILED DESCRIPTION OF THE INVENTION

The recovery method of the invention accommodates recovery of contaminated helium streams not only from the optical fiber drawing step of the manufacturing process, but also from the preform consolidation and/or preform deposition steps. The recovered helium could be purified to a low grade purity to supply the draw stations and/or purified to higher purity level and be available to all steps of the manufacturing process. The preferred embodiment of the invention is a combination of these two options where a sufficient amount of the recovered helium is purified to a lower purity to supply the fiber drawing step in the draw stations and the remainder is purified to high purity and recycled back to the other process steps.

The level of purification of the recovered helium depends on to which process step the helium is being recycled. The preform fabrication and consolidation processes, whether performed in two separate steps or one combined operation, normally require high-purity helium in the range of about 99.99% to about 99.9995%. The fiber drawing process, based on current practice, can use a lower purity in the range of about 90% to about 99%. The helium that could be recovered from each of these steps has a purity of about 75%.

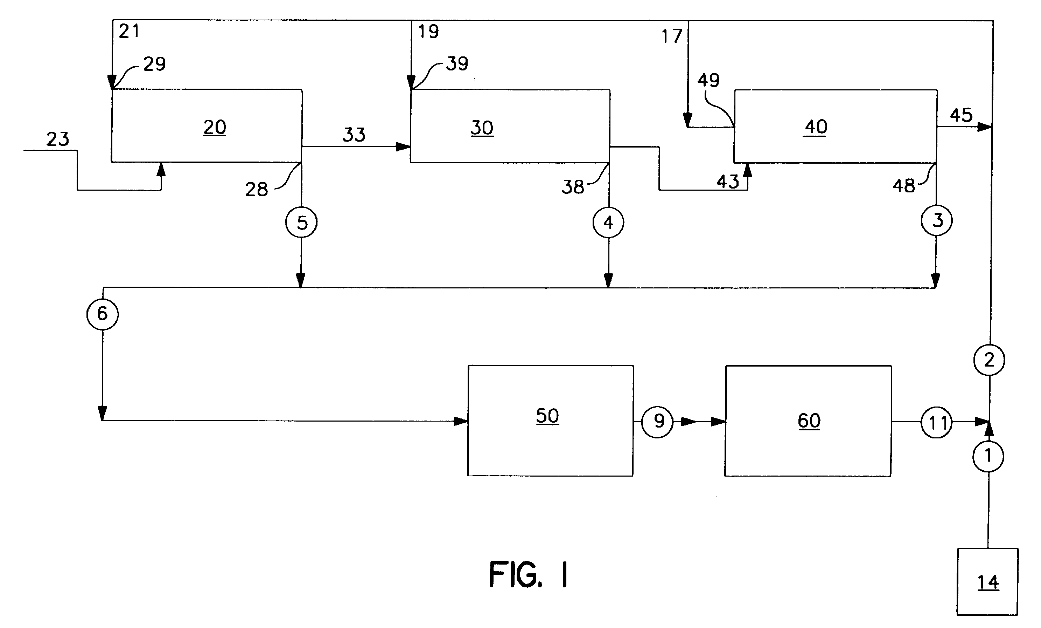

In Fig. 1, optical fiber materials 23 are introduced to an optical fiber manufacturing process. Optical fiber materials 23 enter the preform deposition step 20 of the manufacturing process, then the preform consolidation step 30 and finally the fiber drawing step 40. At each step, optical fiber materials 23, 33, 43 are brought into contact and processed with helium 21, 19, 17, respectively. The optical fiber materials include various combinations of O₂, H₂, CH₄, Ar, SiCl₄, GeCl₄, PoCl₃, BCl₃, N₂, and others. Impurities in the optical fiber materials typically include HCl, H₂O, O₂, H₂, and Si and Ge compounds.

Helium 21, which is provided through an inlet 29, can be used to enhance the preform deposition step 20 of the manufacturing process by exploiting its inertness and unique heat transfer properties. Helium 21 can serve as a carrier gas usually in combination with argon and/or nitrogen. The off-gas 5 which is recovered from the outlet 28 of the deposition step 20 is at an elevated temperature and normally consists primarily of an inert gas stream containing N₂ and Ar with a low concentration of helium and contaminated with the products of hydrogen and oxygen or methane and oxygen combustion, silicon, germanium, phosphorous, boron, other similar compounds, particulates and water. This stream 5 is less likely to be recovered and processed through the recycle system if the helium content is not substantial.

Helium 19 is introduced through inlet 39 to be used as a sweep gas in the preform consolidation step 30. Helium 19 together with chlorine and possibly other gases (not shown) are fed into the consolidation furnace and flow into a hot preform which are included in the consolidation step 30. At furnace temperatures the chlorine and helium permeate through the glass in the preform. The chlorine reacts with any included moisture to form hydrogen chloride gas and oxygen. The helium sweeps the unreacted chlorine, hydrogen chloride and oxygen from the preform. The off-gas 4 which is recovered from the outlet 38 of this consolidation step 30 is at elevated temperature and contains helium contaminated primarily with chlorine, hydrogen chloride gas, oxygen, and other gases that may have been introduced that are related to the practices of the individual producer. The off-gas 4 may also include contaminants that result from air infiltration, such as particulates, O₂, N₂, Ar, and H₂O.

Helium 17 introduced through inlet 49 is used as a heat exchange medium in fiber drawing. The purpose of the helium is to enhance the cooling of the optical fiber so the off-gas 3, which is recovered from the outlet 48, may be at an elevated temperature and include contaminants introduced as a result of air entering the system, namely, particulates, O₂, N₂, Ar, and H₂O. The optical fiber product leaves through stream 45.

Typically, all off-gas streams 3, 4, 5 can be combined to provide a single feed stream 6 to the recovery unit which include, in this embodiment, an intermediate gas purification system 50 and a final gas purification system 60.

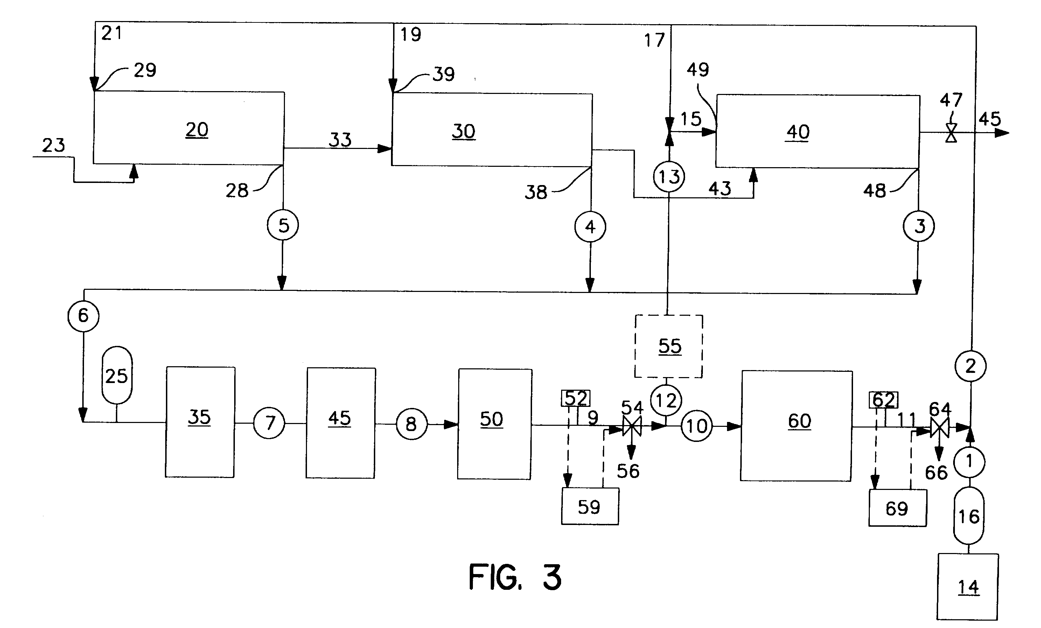

The intermediate gas purification step 50, in its simplest form provides the functions necessary to remove moisture to very low levels. The specific components of the intermediate gas purification step 50 will be discussed in reference to Fig. 3. From this purification step 50, a clean dry gas stream 9, with a purity in the range of about 90% to about 99% is obtained, suitable for feed to the final purification units 60 where it is further purified to greater than 99.99% helium. The purified helium 11, from the final purification system 60, has the properties and characteristics necessary for being combined with make-up helium 1 from the external helium supply system 14. Alternatively, this recovered, purified helium stream 11 may be supplied to a storage vessel or provided for use in another process. Helium feed stream 2 which is a combination of purified helium 11 and make-up helium 1 provides helium to all of the process steps via streams 17, 19 and 21.

Final purification process alternatives include membranes, pressure swing adsorption (PSA), thermal swing adsorption (TSA), chemadsorber systems (getter), gas-phase catalytic conversion systems, and cryogenic upgraders. Membrane or PSA purification systems generally provide the most technically and economically viable alternatives for helium recovery applications. These systems may include feed compressors.

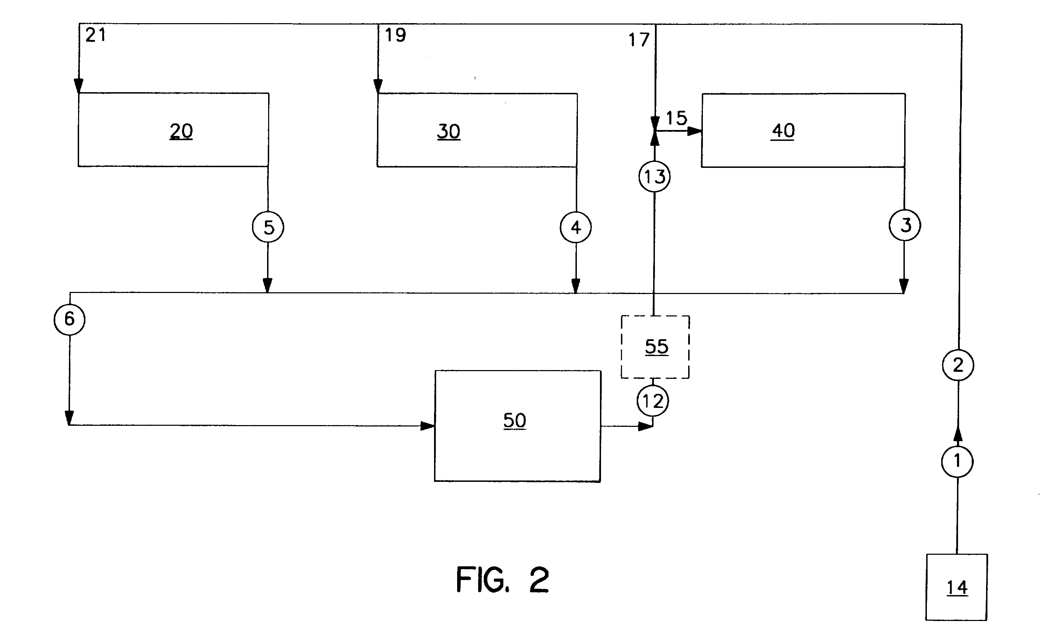

In another embodiment of the invention as shown in Fig. 2, the entire intermediate product stream 12, leaving the intermediate gas purification step 50, can be supplied to the fiber drawing step 40. An additional conditioning step 55 which can include filtration or cooling of the intermediate product 12 before it is introduced to the fiber drawing step 40. The low purity helium stream 13 leaving the additional conditioning step 55 has a purity of about 90% to about 99% required for the fiber drawing step 40 and enters the draw station with any make-up helium 17 as a combined stream 15.

Fig. 3 shows a preferred embodiment of the invention which is a combination of the previous two embodiments described in reference to Figs. 1 and 2. This preferred embodiment apportions the intermediate product stream 9 into two streams 10 and 12. Stream 12 is supplied to the fiber drawing step 40, which may require additional conditioning step 55 resulting in a filtered and cooled stream 13. Stream 13 could be combined with make-up helium from stream 17 and supplied to the draw station 40 as stream 15. The remaining portion stream 10, from the intermediate product stream 9, is processed to high purity in a final purification step 60 to produce helium stream 11 with the characteristics necessary to replace new helium 1 in those process steps selected to receive helium feed 2.

In each embodiment of the invention, gas-collection ballast tanks 25, 16 can be used to mitigate variations in flow conditions and enhance control. Also, the recovered helium feed stream 6 can be processed in a pretreatment step 35 and compressed before being supplied to the intermediate gas purification step 50. The pretreatment step 35 could include cooling, filtration, and/or other conditioning to provide an optimum compressor feed 7. The nature and extent of the supplemental conditioning depends on the constituents of the feed stream 6, and on the type of compressor 45 selected for processing that feed stream.

Although various types of compressors 45 can be used, a "water-ring" compressor is preferred because it can contribute substantially to gas purification while it is boosting the pressure of the recovered gas. If the compressor feed 7 contains chlorine and/or hydrogen chloride gas from the consolidation process and/or other acid gases that are formed if moisture is present, a scrubbing type process is typically used to remove these impurities. If a "conventional" compressor is used such as screw, diaphram or reciprocating compressors. It would be necessary to remove these impurities, most likely by scrubbing, prior to compression. If a water-ring compressor is used, the water seal in the compressor can be adapted to perform, at least partially, the scrubbing function. If additional gas clean-up is necessary, it would be included in post-compression gas treatment, such as the final purification step 60.

The compressor 45 raises the pressure of the compressor feed 7 to the level required for processing through the purification systems and, subsequently, the level required to supply the selected optical fiber manufacturing steps. Any compressor suitable for helium service, that can attain the required pressure, can be used with this system. However, the type actually selected establishes or influences the requirements for purification of the compressed gas stream 8 which is processed in an intermediate gas purification step 50.

The specific intermediate purification processes and/or equipment can vary somewhat depending on the moisture content in the compressed gas stream 8 and the allowable content of the intermediate product stream 9. However, a typical installation could include for example a filter to remove any particulate carryover, a water separator, coalescing filters to remove all liquid water, and a pressure swing adsorber (PSA) dryer to remove water vapor to the required level, (these individual components are not shown in Fig. 3).

If a conventional compressor is used in compression step 45, state-of-the-art systems will be required in the intermediate purification step 50 to protect against oil carryover. If a water-ring compressor is used, a caustic scrubber could be required, in intermediate purification step 50 to completely neutralize the acid components remaining in the stream prior to drying. The entry piping to the compressor also typically includes a temperature indicator (not shown) and a pressure transmitter (not shown) that provides a control signal for the compressor recycle loop.

Process control and product quality are preferably maintained by a system of analyzers 52, 62, controllers 59, 69 and automatic valves 54, 64. The process stream is monitored continuously by oxygen, chlorine, hydrogen chloride, and moisture analyzers to ensure that the level of these contaminants in the recovered helium product is within the specified limits. If excessive amounts of any of these contaminants are present at the monitoring points there is an alarm and a signal to a controller 59, 69 to close the product supply valve 54, 64 in the product supply line and vent the helium as waste streams 56, 66 until the purity returns to acceptable levels. Make-up helium from the on-site supply system continues to flow to sustain operations.

Optical fiber manufacturing, with its vast potential for a very high and rapid rate of growth, is already a major helium consumer. The immediate impact of this recovery-recycle technology will be to reduce unit costs for producing optical fibers by 1) economically recovering a substantial portion of the helium which, otherwise, would be vented; and 2) providing a cost incentive for manufacturers to use higher helium flows to increase production rates. Helium's unique heat transfer properties can enable faster processing rates which, in turn, reduce manufacturing cost.

Specific features of the invention are shown in one or more of the drawings for convenience only, as each feature may be combined with other features in accordance with the invention. Alternative embodiments will be recognized by those skilled in the art and are intended to be included within the scope of the claims.

For example, controllers 59, 69 may be combined into a single microprocessor which activates an alarm and generates close and vent signals to one or both of valves 54, 64 when excessive contaminants are detected by sensor 52 or 62.

## Claims

1. A method for recovering helium from an optical fiber manufacturing process, comprising:
(a) providing helium (21, 19, 17) to an optical fiber manufacturing process which includes the steps of deposition (20), consolidation (30) and fiber drawing (40), each step utilizing apparatus having an inlet (29, 39, 49) and an outlet (28, 38, 48);
(b) providing process material (23, 33, 43) to each step (20, 30, 40) of the optical fiber manufacturing process where it is brought into contact with said helium (21, 19, 17);
(c) recovering at least a portion (3, 4, 5) of said helium, as recovered helium, from the outlet (48) of the fiber drawing step (40) and at least one other step, selected from the deposition (20) and consolidation steps (30), forming a combined stream (6) of recovered helium and providing said recovered helium (6) to an intermediate gas purification system (50);
(d) providing at least a portion of said recovered helium (9) from the intermediate gas purification system (50) to a final purification step (60); and
(e) introducing at least a portion of the recovered helium gas (11) from the final purification step (60) to the inlet (29, 39, 49) of at least one of the optical fiber manufacturing process steps (20, 30, 40).

2. The method of claim I wherein the purity of the recovered helium stream (9) from the intermediate gas purification system (50) is in the range of from about 90% to about 99%.

3. The method of claim 1 wherein a portion (12) of said recovered helium from said intermediate gas purification system (50) in step (c) is provided to the inlet (49) of the fiber drawing step (40) and the remainder (10) of said recovered helium is further purified in the final purification step (60) and provided to at least one step selected from the deposition (20) and consolidation steps (30) of the optical fiber manufacturing process.

4. The method of claim 3 wherein the recovered helium (12) from the intermediate gas purification system (50) in step (c) that is provided to the inlet (49) of the fiber drawing step (40) has a purity of from about 90% to about 99% and the remainder (10) of said recovered helium that is further purified in the final purification step (60) and is provided to at least one step selected from the deposition (20) and consolidation steps (30) of the optical fiber manufacturing process has a purity of from about 99% to about 99.9995%

5. The method of claim 1 wherein said recovered helium (11) from the final purification step (60) in step (d) is combined with make-up feed (1) from an external helium supply system (14) to jointly supply at least one of the optical fiber manufacturing process steps (20, 30, 40).

6. The method of claim 1 wherein said recovered helium (6) is compressed before being provided to the intermediate gas purification system (50).

7. The method of claim 1 wherein said recovered helium (11) in step (e) is provided to the fiber drawing step (40) and at least one other step selected from the deposition (20) and consolidation steps (30) of the optical fiber manufacturing process.

8. A method for recovering helium from an optical fiber manufacturing process, comprising:
(a) providing helium (21, 19, 17) to an optical fiber manufacturing process which includes the steps of deposition (20), consolidation (30) and fiber drawing (40), each step utilizing apparatus having an inlet and an outlet;
(b) providing process material to each step (20, 30, 40) of the optical fiber manufacturing process where it is brought into contact with said helium (21, 19, 17);
(c) recovering at least a portion (3, 4, 5) of said helium, as recovered helium, from the outlet (48) of the fiber drawing step (40) and at least one other step, selected from the deposition (20) and consolidation steps (30), forming a combined stream (6) of recovered helium and providing said recovered helium (6) to an intermediate gas purification system (50); and
(d) providing said recovered helium from the intermediate purification system (50) to the inlet of the fiber drawing step (40).

9. The method of claim 8 wherein said recovered helium (12, 13) from the intermediate purification system (50) has a purity from about 90% to about 99% helium.

10. The method of claim 8 wherein said recovered helium (12) from the intermediate purification system (50) is processed in a gas conditioning step (55) before being provided to the fiber drawing step (40).

## Patentansprüche

1. Verfahren zum Rückgewinnen von Helium aus einem Herstellungsprozeß für optische Fasern, wobei im Zuge des Verfahrens:
(a) Helium (21, 19, 17) einem Herstellungsprozeß für optische Fasern zugeführt wird, welcher die Schritte Abscheidung (20), Verfestigung (30) und Faserziehen (40) umfaßt, wobei jeder Schritt eine Vorrichtung mit einem Einlaß (29, 39, 49) und einem Auslaß (28, 38, 48) verwendet;
(b) jedem Schritt (20, 30, 40) des Herstellungsprozesses für optische Fasern Prozeßmaterial (23, 33, 43) zugeführt wird, welches dort mit dem Helium (21, 19, 17) in Kontakt gebracht wird;
(c) mindestens ein Teil (3, 4, 5) des Heliums als rückgewonnenes Helium von dem Auslaß (48) des Faserziehschrittes (40) und mindestens einem weiteren Schritt, der aus der den Abscheideschritt (20) und den Verfestigungsschritt (30) umfassenden Gruppe ausgewählt ist, rückgewonnen wird, ein kombinierter Strom (6) von rückgewonnenem Helium gebildet wird und das rückgewonnene Helium (6) einem Zwischen-Gasreinigungssystem (50) zugeführt wird;
(d) mindestens ein Teil des rückgewonnenen Heliums (9) von dem Zwischen-Gasreinigungssystem (50) einem End-Reinigungsschritt (60) zugeführt wird; und
(e) mindestens ein Teil des rückgewonnenen Heliumgases (11) von dem End-Reinigungsschritt (60) dem Einlaß (29, 39, 49) mindestens eines der Schritte (20, 30, 40) des Herstellungsprozesses für optische Fasern zugeführt wird.

2. Verfahren nach Anspruch 1, wobei die Reinheit des von dem Zwischen-Gasreinigungssystem (50) rückgewonnenen Heliumstroms (9) im Bereich von etwa 90 bis etwa 99 % liegt.

3. Verfahren nach Anspruch 1, wobei ein Teil (12) des im Schritt (c) von dem Zwischen-Gasreinigungssystem (50) rückgewonnenen Heliums dem Einlaß (49) des Faserziehschritts (40) zugeführt wird und der Rest (10) des rückgewonnenen Heliums in dem End-Reinigungsschritt (60) weiter gereinigt wird und mindestens einem Schritt des Herstellungsprozesses für optische Fasern zugeführt wird, der aus der den Abscheideschritt (20) und den Verfestigungsschritt (30) umfassenden Gruppe ausgewählt ist.

4. Verfahren nach Anspruch 3, wobei das von dem Zwischen-Gasreinigungssystem (50) in Schritt (c) rückgewonnene Helium (12), welches dem Einlaß (49) des Faserziehschritts (40) zugeführt wird, eine Reinheit zwischen etwa 90 % und etwa 99 % aufweist und der Rest (10) des rückgewonnenen Heliums, der in dem End-Reinigungsschritt (60) weiter gereinigt wird und mindestens einem Schritt zugeführt wird, der aus der den Abscheideschritt (20) und den Verfestigungsschritt (30) des Herstellungsprozesses für optische Fasern umfassenden Gruppe ausgewählt ist, eine Reinheit zwischen etwa 99% und etwa 99,9995 % aufweist.

5. Verfahren nach Anspruch 1, wobei das von dem End-Reinigungsschritt (60) in Schritt (d) rückgewonnene Helium (11) mit Auffülleinsatz (1) von einem externen Heliumversorgungssystem (14) kombiniert wird, um zusammen mindestens einen der Schritte (20, 30, 40) des Verfahrens zum Herstellen von optischen Fasern zu versorgen.

6. Verfahren nach Anspruch 1, wobei das rückgewonnene Helium (6) verdichtet wird, bevor es dem Zwischen-Gasreinigungssystem (50) zugeführt wird.

7. Verfahren nach Anspruch 1, wobei das rückgewonnene Helium (11) in Schritt (e) dem Faserziehschritt (40) und mindestens einem weiteren Schritt des Herstellungsprozesses für optische Fasern zugeführt wird, der aus der den Abscheideschritt (20) und den Verfestigungsschritt (30) umfassenden Gruppe ausgewählt ist.

8. Verfahren zum Rückgewinnen von Helium von einem Herstellungsprozeß für optische Fasern, wobei im Zuge des Verfahrens:
(a) Helium (21, 19, 17) einem Herstellungsprozeß für optische Fasern zugeführt wird, welcher die Schritte Abscheidung (20), Verfestigung (30) und Faserziehen (40) umfaßt, wobei jeder Schritt eine Vorrichtung verwendet, die einen Einlaß und einen Auslaß aufweist;
(b) Prozeßmaterial jedem Schritt (20, 30, 40) des Herstellungsverfahrens für optische Fasern zugeführt wird, welches dort in Kontakt mit dem Helium (21, 19, 17) gebracht wird;
(c) mindestens ein Teil (3, 4, 5) des Heliums als rückgewonnenes Helium von dem Auslaß (48) des Faserziehschritts (40) und mindestens einem weiteren Schritt rückgewonnen wird, der aus der den Abscheideschritt (20) und den Verfestigungsschritt (30) umfassenden Gruppe ausgewählt ist, ein kombinierter Strom (6) an rückgewonnenem Helium gebildet wird und das rückgewonnene Helium (6) einem Zwischen-Gasreinigungssystem (50) zugeführt wird; und
(d) das rückgewonnene Helium von dem Zwischen-Reinigungssystem (50) dem Einlaß des Faserziehschritts (40) zugeführt wird.

9. Verfahren nach Anspruch 8, wobei das rückgewonnene Helium (12, 13) von dem Zwischen-Reinigungssystem (50) eine Reinheit zwischen etwa 90 % und etwa 99 % Helium aufweist.

10. Verfahren nach Anspruch 8, wobei das von dem Zwischen-Reinigungssystem (50) rückgewonnene Helium (12) in einem Gas-Konditionierschritt (55) verarbeitet wird, bevor es dem Faserziehschritt (40) zugeführt wird.

## Revendications

1. Procédé pour récupérer de l'hélium d'un procédé de fabrication de fibres optiques, comprenant :
(a) l'apport d'hélium (21, 19, 17) à un procédé de fabrication de fibres optiques qui comprend les étapes de déposition (20), consolidation (30) et étirage (40) de fibre, chaque étape utilisant un appareil ayant une entrée (29, 39, 49) et une sortie (28, 38, 48) ;
(b) l'apport de matières de traitement (23, 33, 43) à chaque étape (20, 30, 40) du procédé de fabrication de fibres optiques où il est amené en contact avec ledit hélium (21, 19, 17) ;
(c) la récupération d'au moins une portion (3, 4, 5) dudit hélium, en tant qu'hélium récupéré, depuis la sortie (48) de l'étape (40) d'étirage de fibre et d'au moins une autre étape, choisie entre les étapes (20) de déposition (30) et de consolidation, la formation d'un courant combiné (6) d'hélium récupéré et l'apport dudit hélium récupéré (6) à un système intermédiaire (50) de purification de gaz ;
(d) l'apport d'au moins une portion dudit hélium récupéré (9) provenant du système intermédiaire (60) de purification de gaz à une étape de purification finale (60) ; et
(e) l'introduction d'au moins une portion de l'hélium gazeux récupéré (11) provenant de l'étape de purification finale (60) dans l'entrée (29, 39, 49) d'au moins l'une des étapes (20, 30, 40) du procédé de fabrication de fibres optiques.

2. Procédé selon la revendication 1, dans lequel la pureté du courant d'hélium récupéré (9) provenant du système intermédiaire (50) de purification de gaz est dans la plage d'environ 90 % à environ 99 %.

3. Procédé selon la revendication 1, dans lequel une portion (12) dudit hélium récupéré provenant dudit système intermédiaire (50) de purification de gaz dans l'étape (c) est fournie à l'entrée (49) de l'étape (40) d'étirage de fibre et la portion restante (10) dudit hélium récupéré est encore purifiée dans l'étape de purification finale (60) et fournie à au moins une étape choisie entre les étapes (20) de déposition et (30) de consolidation du procédé de fabrication des fibres optiques.

4. Procédé selon la revendication 3, dans lequel l'hélium récupéré (12) provenant du système intermédiaire (50) de purification de gaz dans l'étape (c), qui est fourni à l'entrée (49) de l'étape (40) d'étirage de fibres, présente une pureté d'environ 90 % à environ 99 % et la portion restante (10) dudit hélium récupéré, qui est encore purifiée dans l'étape de purification finale (60) et est fournie à au moins une étape choisie entre les étapes (20) de déposition et (30) de consolidation du procédé de fabrication des fibres optiques, présente une pureté d'environ 99 % à environ 99,9995 %.

5. Procédé selon la revendication 1, dans lequel ledit hélium récupéré (11) provenant de l'étape de purification finale (60) dans l'étape (d) est combiné à une charge d'appoint (1) provenant d'un système extérieur (14) d'alimentation en hélium pour alimenter conjointement au moins une des étapes (20, 30, 40) du procédé de fabrication des fibres optiques.

6. Procédé selon la revendication 1, dans lequel ledit hélium récupéré (6) est comprimé avant d'être fourni au système intermédiaire (50) de purification de gaz.

7. Procédé selon la revendication 1, dans lequel ledit hélium récupéré (11) dans l'étape (e) est fourni à l'étape (40) d'étirage de fibres et à au moins une autre étape choisie entre les étapes (20) de déposition et (30) de consolidation du procédé de fabrication des fibres optiques.

8. Procédé pour récupérer de l'hélium à partir d'un procédé de fabrication des fibres optiques, comprenant :
(a) l'apport d'hélium (21, 19, 17) à un procédé de fabrication de fibres optiques qui comprend les étapes de déposition (20), consolidation (30) et étirage (40) de fibres, chaque étape utilisant un appareil ayant une entrée et une sortie ;
(b) l'apport d'une matière de traitement à chaque étape (20, 30, 40) du procédé de fabrication des fibres optiques, où elle est amenée en contact avec ledit hélium (21, 19, 17) ;
(c) la récupération d'au moins une portion (3, 4, 5) dudit hélium, en tant qu'hélium récupéré, à partir de la sortie (48) de l'étape (40) d'étirage de fibres et d'au moins une autre étape, choisie entre les étapes (20) de déposition et (30) de consolidation, la formation d'un courant combiné (6) d'hélium récupéré et l'apport dudit hélium récupéré (6) à un système intermédiaire (50) de purification de gaz ; et
(d) l'apport dudit hélium récupéré provenant du système intermédiaire (50) de purification à l'entrée de l'étape (40) d'étirage de fibres.

9. Procédé selon la revendication 8, dans lequel ledit hélium récupéré (12, 13) provenant du système intermédiaire (50) de purification a une pureté d'environ 90 % à environ 99 % d'hélium.

10. Procédé selon la revendication 8, dans lequel ledit hélium récupéré (12) provenant du système intermédiaire (50) de purification est traité dans une étape (55) de conditionnement de gaz avant d'être fourni à l'étape (40) d'étirage de fibres.
